# EUROPÄISCHE PATENTANMELDUNG

(11) **EP 3 958 076 A1**
(43) Veröffentlichungstag der Anmeldung: **23.02.2022**
(21) Anmeldenummer: 20191270.6
(22) Anmeldetag: 17.08.2020
(51) Int. Cl.: G05B 19/409

(54) **VERFAHREN ZUR ERKENNUNG EINER BETRIEBSART EINER WERKZEUGMASCHINE, SOWIE WERKZEUGMASCHINE**

(71) Anmelder: Hilti Aktiengesellschaft, 9494 Schaan (LI)
(72) Erfinder: Drexl, Tobias, 86947 Weil (DE)
(74) Vertreter: Hilti Aktiengesellschaft Corporate Intellectual Property

(57) **Zusammenfassung**

Die vorliegende Erfindung betrifft ein Verfahren zur Erkennung einer Betriebsart einer Werkzeugmaschine. In einem weiteren Aspekt betrifft die Erfindung eine Werkzeugmaschine mit einem Sensor zur Erfassung von axialen Beschleunigungen und/oder Winkelbeschleunigungen, wobei die Werkzeugmaschine dazu eingerichtet ist, das vorgeschlagene Verfahren durchzuführen.

## Beschreibung

Die vorliegende Erfindung betrifft ein Verfahren zur Erkennung einer Betriebsart einer Werkzeugmaschine. In einem weiteren Aspekt betrifft die Erfindung eine Werkzeugmaschine mit einem Sensor zur Erfassung von axialen Beschleunigungen und/oder Winkelbeschleunigungen, wobei die Werkzeugmaschine dazu eingerichtet ist, das vorgeschlagene Verfahren durchzuführen.

### Hintergrund der Erfindung:

Im Stand der Technik sind Werkzeugmaschinen bekannt, die sowohl ständergeführt, als auch handgeführt betrieben werden können. Bei der Ständerführung liegt die Werkzeugmaschine an einem sogenannten Bohrständer befestigt vor und muss dadurch bei Betrieb der Werkzeugmaschine nicht von Hand gehalten werden. Zum einen hat der Nutzer dadurch die Hände frei, zum anderen kann dadurch über einen längeren Zeitraum mit der Werkzeugmaschine gearbeitet werden, weil der Betrieb der Werkzeugmaschine nicht durch die Ausdauer und die Kraft des Nutzers beschränkt ist. Bei handgeführten Applikationen kann dahingegen flexibler und variabler gearbeitet werden. Der Ständerbetrieb und der Handbetrieb werden im Kontext der Erfindung bevorzugt als Betriebsarten der Werkzeugmaschine bezeichnet.

Es sind Anwendungsfälle für solche sowohl im ständergeführten, als auch im handgeführten Betrieb verwendbaren Werkzeugmaschinen denkbar, bei denen unterschiedliche Parameter relevant sind, je nachdem, ob mit der Werkzeugmaschine im handgeführten Betrieb oder im ständergeführten Betrieb gearbeitet wird. Auch das Verhalten einer Schaltervorrichtung an der Werkzeugmaschine kann dabei abhängig von der Betriebsart (hand- oder ständergeführt) variieren. Dies kann beispielsweise eine Potentiometer-Funktion und/oder einen arretierbaren Schalter der Werkzeugmaschine betreffen.

Selbstverständlich wäre es möglich, mit Hilfe eines zusätzlichen (Kontakt-)Sensors zu ermitteln, ob die Werkzeugmaschine ständer- oder handgeführt betrieben wird. Die Vorsehung eines weiteren Sensors ist aber gerade bei Werkzeugmaschinen, die auf Baustellen betrieben werden, unerwünscht, weil damit Einfallsmöglichkeiten für Staub und/oder Feuchtigkeit geschaffen werden. Außerdem erhöht die Vorsehung eines weiteren Sensors die Komplexität des Systems, was ebenfalls unerwünscht ist.

Aufgabe der vorliegenden Erfindung ist es, ein Verfahren zur Erkennung einer Betriebsart einer Werkzeugmaschine bereitzustellen, mit dem vorzugsweise automatisch die Betriebsart der Werkzeugmaschine erkannt werden kann, so dass dem Nutzer in Abhängigkeit von der erkannten Betriebsart unterschiedliche Funktionalitäten angezeigt und/oder angeboten werden können. Dabei soll die Erkennung der Betriebsart insbesondere ohne die Vorsehung eines weiteren Sensors ermöglicht werden, damit eine besonders robuste und baustellentaugliche Werkzeugmaschine zur Ausführung des Verfahrens bereitgestellt werden kann. Es wäre insbesondere wünschenswert, wenn bei dem Verfahren bzw. der zugrundeliegenden Datenauswertung auf bestehende Daten und Messwerte zurückgegriffen werden könnte.

Die Aufgabe wird durch den Gegenstand der unabhängigen Ansprüche gelöst. Vorteilhafte Ausführungsformen zum Gegenstand der unabhängigen Ansprüche finden sich in den abhängigen Unteransprüchen.

### Beschreibung der Erfindung:

Die Aufgabe wird gelöst durch ein Verfahren zur Erkennung einer Betriebsart einer Werkzeugmaschine. Das Verfahren ist dadurch gekennzeichnet, dass axiale Beschleunigungen und Winkelbeschleunigungen mit einem Sensor erfasst und als Grundlage für eine Ermittlung einer Auslenkung der Werkzeugmaschine verwendet werden, wobei die ermittelte Auslenkung unterschiedlichen Betriebsarten der Werkzeugmaschine zugeordnet werden kann. Bei den Betriebsarten der Werkzeugmaschine handelt es sich bevorzugt um die Betriebsart "Handbetrieb" und "Ständerbetrieb". Diese Betriebsarten können im Sinne der Erfindung als erste und zweite Betriebsart der Werkzeugmaschine bezeichnet werden. Vorzugsweise kann bei dem vorgeschlagenen Verfahren die ermittelte Auslenkung der Werkzeugmaschine einer ersten Betriebsart oder einer zweiten Betriebsart der Werkzeugmaschine zugeordnet werden.

Die Zuordnung der ermittelten Werte für die axiale und die Winkelbeschleunigung zu einer Betriebsart wird insbesondere durch die unterschiedlich großen Auslenkungen der Werkzeugmaschine ermöglicht, die insbesondere bei Start der Werkzeugmaschine in den unterschiedlichen Betriebsarten auftreten bzw. gemessen werden können. Dabei werden große Auslenkungswerte insbesondere der Betriebsart "Handbetrieb" zugeordnet, während kleinere Auslenkungswerte der Betriebsart "Ständerbetrieb" zugeordnet werden. Auf diesen Weise kann durch Ermittlung der axialen und der Winkelbeschleunigungen entlang der Achsen eines Koordinatensystems, mit deren Hilfe die Auslenkung beim Einschalten der Werkzeugmaschine effektiv bestimmt werden kann, wirksam bestimmt werden, ob die Werkzeugmaschine im Handbetrieb oder im Ständerbetrieb betrieben wird. Mit anderen Worten kann die Auslenkung der Werkzeugmaschine durch die von dem Sensor zur Erfassung von axialen Beschleunigungen und/oder Winkelbeschleunigungen ermittelten Messwerte bestimmt und als Grundlage für die Erkennung der Betriebsart der Werkzeugmaschine verwendet werden.

Es ist im Sinne der Erfindung bevorzugt, dass der Sensor an der Werkzeugmaschine angeordnet vorliegt. Darüber hinaus ist es bevorzugt, dass die Auslenkung der Werkzeugmaschine bzw. die zugrundeliegenden Beschleunigungen bei Einschalten der Werkzeugmaschine erfasst werden. Mit anderen Worten ist eine bevorzugte Ausgestaltung des vorgeschlagenen Verfahrens dadurch gekennzeichnet, dass die axialen Beschleunigungen und die Winkelbeschleunigungen mit einem Sensor an der Werkzeugmaschine erfasst und als Grundlage für die Ermittlung der Auslenkung beim Einschalten der Werkzeugmaschine verwendet werden können, wobei die ermittelte Auslenkung einer ersten Betriebsart oder einer zweiten Betriebsart der Werkzeugmaschine zugeordnet werden kann.

In einer bevorzugten Ausgestaltung kann das Verfahren die folgenden Schritte umfassen
a) Bereitstellung einer Werkzeugmaschine mit einem Sensor zur Erfassung von axialen Beschleunigungen und/oder Winkelbeschleunigungen,
b) Ermittlung von axialen Beschleunigungen a1, a2 und a3 entlang einer ersten, zweiten und dritten Achse eines gedachten Koordinatensystems,
c) Ermittlung von Winkelbeschleunigungen w1, w2 und w3 entlang der ersten, zweiten und dritten Achse des gedachten Koordinatensystems,
d) Ermittlung eines ersten Drehwinkel alpha, eines zweiten Drehwinkels beta und dritten Drehwinkels gamma um die drei Achsen,
e) Bestimmung einer ersten, zweiten und dritten Drehwinkelbeschleunigung,
f) Ableitung einer Betriebsart der Werkzeugmaschine aus den unter e) bestimmten Drehwinkelbeschleunigungen.

Bei dem Sensor zur Erfassung von axialen Beschleunigungen und/oder Winkelbeschleunigungen kann es sich vorzugsweise um einen Gyrosensor handeln. Der Erfindung liegt die Erkenntnis des Erfinders zugrunde, dass sich die Drehbeschleunigungen entlang der drei Achsen eines gedachten Koordinatensystems beim Starten einer Werkzeugmaschine erheblich unterscheiden, je nachdem, ob die Werkzeugmaschine im Hand- oder im Ständerbetrieb betrieben wird. Der Erfinder hat erkannt, dass durch die Masseträgheit des Bohrsystems, das vorzugsweise einen Motor, eine Welle, ein Getriebe und ein Werkzeug umfasst, eine Auslenkung beim Start des Motors im Handbetrieb wesentlich größer ist als die Auslenkung im Bohrständer. Dies insbesondere deswegen, weil die Werkzeugmaschine im Bohrständer verschraubt vorliegt. Daher können die unterschiedlichen Auslenkungen beim Einschalten des Motors der Werkzeugmaschine dazu verwendet werden, um eine Betriebsart der Werkzeugmaschine wirksam und besonders fehlerfrei zu erkennen, und zwar gemäß dem vorgeschlagenen Verfahren. Die Auslenkung der Werkzeugmaschine im Handbetrieb erfolgt insbesondere um eine Handachse herum. Der Ausdruck "Erkennung der Betriebsart einer Werkzeugmaschine" ist im Sinne der Erfindung gleichbedeutend damit, dass mit Hilfe des vorgeschlagenen Verfahrens erkannt wird, ob mit der Werkzeugmaschine im Handbetrieb oder im Ständerbetrieb gearbeitet wird. Durch die bevorzugt automatische Betriebsarterkennung kann der Betrieb der Werkzeugmaschine an die erkannte Betriebsart angepasst werden. Dies kann beispielsweise dadurch erfolgen, dass dem Nutzer der Werkzeugmaschine in Abhängigkeit von der erkannten Betriebsart auf einer Anzeigevorrichtung unterschiedliche Funktionalitäten oder Parameter angezeigt oder zur Auswahl angeboten werden.

Insbesondere kann das vorgeschlagenen Verfahren mit einer Werkzeugmaschine durchgeführt werden, wobei die Werkzeugmaschine einen Sensor zur Erfassung von axialen Beschleunigungen und/oder Winkelbeschleunigungen mit drei Axialbeschleunigungsachsen und drei Drehbeschleunigungsachsen umfasst. Der Sensor kann beispielsweise als Gyrosensor ausgebildet sein. Mit anderen Worten ist der Gyrosensor der Werkzeugmaschine dazu eingerichtet, Axialbeschleunigungen und Drehbeschleunigungen entlang von drei Raumachsen zu messen. Das vorgeschlagene Verfahren beinhaltet insbesondere solche Verfahrensschritte, die die Bestimmung der Drehwinkelbeschleunigungen in den drei Raumachsen ermöglichen, sowie eine Zuordnung der Ergebnisse zu einer der beiden Betriebsarten "Ständerbetrieb" oder "Handbetrieb".

Es ist im Sinne der Erfindung bevorzugt, dass die gemessenen Größen unter Verwendung geeigneter Filter bzw. unter Verwendung einer geeigneten Filterauswahl und Umrechnungen mit hinterlegten Werten verglichen werden können, um eine sichere Zuordnung der Ergebnisse zu einer der beiden Betriebsarten vornehmen zu können. Insbesondere betrifft die Erfindung auch ein Computerprogrammprodukt, das auf der Werkzeugmaschine betrieben werden kann. Dazu kann die Werkzeugmaschine vorzugsweise einen Prozessor und/oder eine Steuereinrichtung, sowie Mittel zum Speichern von Daten und Messwerten umfassen. Beispielsweise können in den Speichermittel Datenbanken mit Werten für die Drehwinkelbeschleunigungswerte hinterlegt sein, die vorzugsweise dazu verwendet werden können, eine Zuordnung der Messwerte zu den Betriebsarten zu ermöglichen. Es kann aber auch bevorzugt sein, dass die Werkzeugmaschine über Kommunikationsmittel verfügt, die es der Werkzeugmaschine ermöglichen, auf eine Cloud oder einen Server zuzugreifen, falls die Vergleichswerte, die zur Bestimmung der Betriebsart der Werkzeugmaschine in einer Cloud oder auf einem Server abgelegt sind.

Es ist im Sinne der Erfindung bevorzugt, dass die Werkzeugmaschine in verschiedenen Betriebsarten betrieben werden kann. Beispielsweise kann die Werkzeugmaschine ständergeführt oder handgeführt betrieben werden. Je nach Betriebsweise können für den Betrieb unterschiedliche Parameter relevant sein. Beispielsweise können Kipppunkte auf der Motorkennlinie je nach Betriebsart der Werkzeugmaschine umgeschaltet werden. Tests haben gezeigt, dass der Bohrständer mehr Drehmoment aufnehmen kann, als dies bei einem Handbetrieb der Werkzeugmaschine der Fall ist. Darüber hinaus können die Motorkennlinien bzw. ihr Verlauf auch von dem ausgewählten Motorentyp abhängen, da beispielsweise bei bürstenlosen Motoren, wie Asynchronmaschinen, andere Kippkennlinien gefahren werden können als bei anderen Motortypen. Es ist im Sinne der Erfindung bevorzugt, dass die Werkzeugmaschine im Handbetrieb träger reagiert als im Ständerbetrieb. Mit anderen Worten ist die vorgeschlagene Werkzeugmaschine dazu eingerichtet, sich im Handbetrieb träger zu verhalten als im Ständerbetrieb. Darüber hinaus können die unterschiedlichen, von der Betriebsart der Werkzeugmaschine abhängigen Parameter beispielsweise darin bestehen, dass Zusatzfunktionen freigeschaltet werden, wie zum Beispiel eine automatische Vorschubeinrichtung, wie eine Autofeed-Vorrichtung. Es ist im Sinne der Erfindung bevorzugt, dass eine Vorschubeinrichtung insbesondere im Ständerbetrieb der Werkzeugmaschine eingesetzt wird.

Es ist im Sinne der Erfindung bevorzugt, dass die variierenden Parameter an der Werkzeugmaschine angezeigt werden können. Dazu kann die Werkzeugmaschine entsprechende Anzeigemittel umfassen, wie zum Beispiel ein Display, einen Monitor oder einen Bildschirm. Auch ein Touchscreen ist vorstellbar. Es kann darüber hinaus bevorzugt sein, dass ein Nutzer der Werkzeugmaschine die unterschiedlichen Parameter einstellen kann, je nachdem, in welcher Betriebsart die Werkzeugmaschine betrieben wird. Eine solche Einstellung von Parametern kann im Kontext der vorliegenden Erfindung allerdings auch automatisch erfolgen, insbesondere in Abhängigkeit von der ermittelten Betriebsart der Werkzeugmaschine. Es ist im Sinne der Erfindung, dass mit der Erfindung eine Umschaltung eines Anzeigemittels, wie einem Display, bereitgestellt werden kann. Beispielsweise können bei Betrieb der Werkzeugmaschine in den unterschiedlichen Betriebsarten - beispielsweise Ständer- und Handbetrieb - unterschiedliche Informationen für den Nutzer relevant sein. Im Falle des Ständerbetriebs können zum Beispiel Informationen, die die Vorschubvorrichtung betreffen, angezeigt werden, die bei Betrieb der Werkzeugmaschine im Handbetrieb nicht relevant sind, weil eine Vorschubeinrichtung dann nicht zum Einsatz kommt. Beispielsweise kann eine Wasserwaagenfunktion insbesondere im Handbetrieb der Werkzeugmaschine für den Nutzer relevant sein, während eine Poweranzeige im Ständerbetrieb besonders relevant ist.

Es ist im Sinne der Erfindung bevorzugt, dass ein Verhalten bzw. eine Ausgestaltung einer Schaltvorrichtung der Werkzeugmaschine in Abhängigkeit von der Betriebsart der Werkzeugmaschine variieren kann. Beispielsweise kann ein vorzugsweise binär zu schaltender An-/AusSchalter im Ständerbetrieb besonders zweckmäßig sein, währen beim Handbetrieb der Werkzeugmaschine eine Drehzahlvorgabe zweckmäßig sein kann, die zum Beispiel durch eine Potentiometer-Funktion bereitgestellt werden kann. In einer bevorzugten Ausführungsform der Erfindung kann eine Schalterarretierung vorgesehen. Diese Ausführungsform ist insbesondere in der Betriebsart «Ständerbetrieb» bevorzugt.

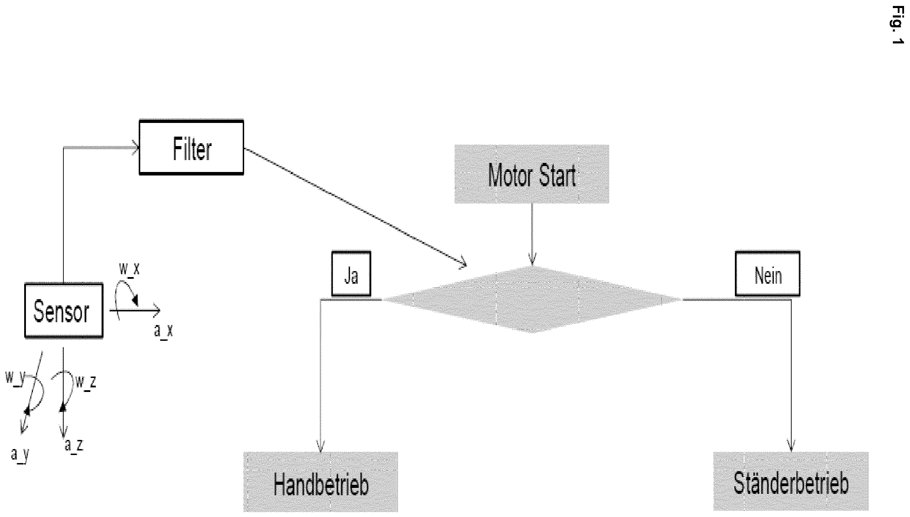

Das vorgeschlagene Verfahren umfasst die Ermittlung von axialen Beschleunigungen a1, a2 und a3 entlang einer ersten, zweiten und dritten Achse eines gedachten Koordinatensystems. Bei dem gedachten Koordinatensystem kann es sich vorzugsweise um ein bekanntes kartesisches Koordinatensystem mit einer x-, y- und z-Achse handeln. Eine mögliche Anordnung von Achsen dieses gedachten Koordinatensystems ist in Figur 1 gezeigt. Dabei kann beispielsweise die x-Achsen in horizontaler Richtung verlaufen und die z-Achse in vertikaler Richtung, während die y-Achse aus der Papierebene hinausragt. Es ist im Sinne der Erfindung bevorzugt, dass die erste Achse eine x-Achse des gedachten Koordinatensystems darstellt, die zweite Achse eine y-Achse und die dritte Achse eine z-Achse. Es ist ferner bevorzugt, dass die erste, zweite und dritte Achse mit Achsen der Werkzeugmaschine zusammenfallen bzw. mit ihnen korrespondieren.

Beispielsweise kann der Sensor zur Erfassung von axialen Beschleunigungen und/oder Winkelbeschleunigungen im Bereich der Elektronik, beispielsweise auf einer Leiterplatte, angeordnet vorliegen. Der Sensor kann vorzugsweise auch im Bereich eines Human Maschine Interface (HMI) angeordnet sein. Tests haben gezeigt, dass die genannten Positionen des Sensors besonders geeignet sind, um die axialen Beschleunigungen und die Drehwinkelbeschleunigungen zu ermitteln. Es ist im Sinne der Erfindung bevorzugt, eine Bezugsachse des Koordinatensystems so ausgewählt wird, dass die Bohrachse als z-Achse des Koordinatensystems verwendet wird.

Es ist im Sinne der Erfindung bevorzugt, mit dem Zeichen a1 die axiale Beschleunigung der Werkzeugmaschine in Richtung der ersten Achse, d.h. bevorzugt in Richtung der x-Achse, zu beschreiben. Analog ist es im Sinne der Erfindung bevorzugt, mit dem Zeichen a2 die axiale Beschleunigung der Werkzeugmaschine in Richtung der zweiten Achse, d.h. bevorzugt in Richtung der y-Achse, zu beschreiben bzw. mit dem Zeichen a3 die axiale Beschleunigung der Werkzeugmaschine in Richtung der dritten Achse, d.h. bevorzugt in Richtung der z-Achse, zu beschreiben.

Die Werkzeugmaschine weist vorzugsweise auch eine Winkelbeschleunigung auf, mit der sich die Werkzeugmaschine um die drei Achsen dreht. Vorzugsweise beschreibt w1 die Winkelbeschleunigung um die erste, d.h. die x-Achse. Analog beschreibt w2 die Winkelbeschleunigung um die zweite, d.h. die y-Achse, während w3 die Winkelbeschleunigung um die dritte, d.h. die z-Achse beschreibt.

In einem nächsten Verfahrensschritt lassen sich aus den Datensätzen ai und wi für die axiale Beschleunigung bzw. die Winkelbeschleunigung die Drehwinkel um die jeweiligen Achsen bestimmen. Dies kann beispielsweise durch geeignete mathematische Integrationsverfahren erfolgen.

Diese werden im Sinne der Erfindung vorzugsweise als erster Drehwinkel alpha, zweiter Drehwinkel beta und dritter Drehwinkel gamma bezeichnet.

In einem weiteren Verfahrensschritt wird die Betriebsart der Werkzeugmaschine auf Grundlage der zuvor bestimmten axialen und Drehwinkelbeschleunigungen ermittelt. Dazu wird die Auslenkung der Werkzeugmaschine bei ihrem Einschalten auf Grundlage der erfassten Beschleunigungsdaten ermittelt. Die ermittelte Auslenkung kann dann einer ersten oder einer zweiten Betriebsart zugeordnet werden, wobei große Auslenkungen beispielsweise für einen Handbetrieb der Werkzeugmaschine stehen können und kleine Auslenkungswerte für einen Ständerbetrieb.

Es ist im Sinne der Erfindung bevorzugt, dass das Verfahren einen zusätzlichen Verfahrensschritt umfassen kann, nämlich die Anzeige unterschiedlicher Gegenstände auf einer Anzeigenvorrichtung der Werkzeugmaschine in Abhängigkeit von der erkannten Betriebsart der Werkzeugmaschine. Bei den angezeigten Gegenständen kann es sich um verschiedene Bilder, Modi und/oder (Bedienungs-)Parameter handeln, die für eine der beiden Betriebsarten - hand- oder ständergeführt - relevant sind. Es kann auch sein, dass es Anzeigegegenstände gibt, die für beide Betriebsarten der Werkzeugmaschine relevant sind. Diese können dann vorzugsweise auch in beiden Betriebsarten angezeigt werden. Es ist im Sinne der Erfindung bevorzugt, dass die die Werkzeugmaschine zur Anzeige der unterschiedlichen Gegenstände je nach Betriebsart eine Anzeigenvorrichtung umfasst. Dabei kann es sich um bekannte Anzeigenvorrichtungen, wie Displays, Monitore oder Bildschirme handeln, wobei die Bildschirme beispielsweise auch als touchsensitive Bildschirme ausgebildet sein können, die durch Berührungen eines Nutzers der Werkzeugmaschine Eingaben aufnehmen können.

Es ist im Sinne der Erfindung bevorzugt, dass die mit dem Verfahren ermittelten Daten verwendet werden können, um festzustellen, ob ein Rutschkupplungsauslösungsereignis stattgefunden hat. Mit anderen Worten können die Daten dazu verwendet werden, um herauszufinden, ob eine Rutschkupplung der Werkzeugmaschine ausgelöst hat.

In einem zweiten Aspekt betrifft die Erfindung eine Werkzeugmaschine, die einen Sensor zur Erfassung von axialen Beschleunigungen und/oder Winkelbeschleunigungen aufweist, wobei die Werkzeugmaschine zur Durchführung des vorgeschlagenen Verfahrens eingerichtet ist. Es ist im Sinne der Erfindung bevorzugt, dass es sich bei dem Sensor um einen Gyrosensor handelt. Die für das vorgeschlagene Verfahren eingeführten Begriffe, technischen Wirkungen und Vorteile gelten für die Werkzeugmaschine, mit der das Verfahren durchgeführt werden kann, analog.

Weitere Vorteile der Erfindung ergeben sich aus der folgenden Figurenbeschreibung. In der Figur ist eine beispielhafte Ausführungsform der vorliegenden Erfindung dargestellt. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Darstellung eines möglichen Ablaufs einer bevorzugten Ausführungsform des vorgeschlagenen Verfahrens

### Ausführungsbeispiele und Figurenbeschreibung:

Fig. 1 zeigte einen möglichen Ablauf einer bevorzugten Ausführungsform des vorgeschlagenen Verfahrens. Zunächst werden mit einem Sensor verschiedene Beschleunigungswerte erfasst. Dabei kann es sich um die Beschleunigungen entlang der drei Koordinatenachsen eines Koordinatensystems handeln. Diese Beschleunigungen werden im Sinne der Erfindung als «axiale Beschleunigungen» bezeichnet. Sie werden in der Fig. 1 als Beschleunigungen a_x, a_y und a_z dargestellt. Darüber hinaus können Winkelbeschleunigungen mit dem Sensor gemessen werden. Dabei kann es sich um die Drehwinkelbeschleunigungen um die drei Koordinatenachsen des Koordinatensystems handeln. Die Winkelbeschleunigungen werden in der Fig. 1 als Beschleunigungen w_x, w_y und w_z dargestellt. Die von dem Sensor erfassten Daten können gefiltert und beispielsweise von einer Steuereinrichtung der Werkzeugmaschine ausgewertet werden. Die Auswertung umfasst beispielsweise die Ermittlung der Auslenkung der Werkzeugmaschine beim Einschalten, sowie eine Zuordnung dieser ermittelten Auslenkung zu einer Betriebsart der Werkzeugmaschine. Bei den Betriebsarten der Werkzeugmaschine kann es sich vorzugsweise um einen Handbetrieb als erste Betriebsart und einen Ständerbetrieb als zweite Betriebsart handeln. Eine große Auslenkung der Werkzeugmaschine beim Start kann beispielsweise als Handbetrieb der Werkzeugmaschine interpretiert werden (in der Figur 1 dargestellt als «Ja»), während eine kleine Auslenkung der Werkzeugmaschine beim Start als Ständerbetrieb der Werkzeugmaschine interpretiert werden kann (in der Figur 1 dargestellt als «Nein»).

## Patentansprüche

1. Verfahren zur Erkennung einer Betriebsart einer Werkzeugmaschine
**dadurch gekennzeichnet, dass**
axiale Beschleunigungen und Winkelbeschleunigungen mit einem Sensor erfasst und als Grundlage für eine Ermittlung einer Auslenkung der Werkzeugmaschine verwendet werden, wobei die ermittelte Auslenkung unterschiedlichen Betriebsarten der Werkzeugmaschine zugeordnet werden kann.

2. Verfahren nach Anspruch 1
**umfassend die folgenden Schritte:**
a) Bereitstellung einer Werkzeugmaschine mit einem Sensor zur Erfassung von axialen Beschleunigungen und/oder Winkelbeschleunigungen,
b) Ermittlung von axialen Beschleunigungen a1, a2 und a3 entlang einer ersten, zweiten und dritten Achse eines gedachten Koordinatensystems,
c) Ermittlung von Winkelbeschleunigungen w1, w2 und w3 entlang der ersten, zweiten und dritten Achse des gedachten Koordinatensystems,
d) Ermittlung eines ersten Drehwinkel alpha, eines zweiten Drehwinkels beta und dritten Drehwinkels gamma um die drei Achsen,
e) Ableitung einer Betriebsart der Werkzeugmaschine aus den unter e) bestimmten Drehwinkelbeschleunigungen.

3. Verfahren nach Anspruch 1 oder 2
**gekennzeichnet durch folgenden zusätzlichen Verfahrensschritt:**
- Anzeige unterschiedlicher Gegenstände auf einer Anzeigenvorrichtung der Werkzeugmaschine in Abhängigkeit von der erkannten Betriebsart der Werkzeugmaschine.

4. Verfahren nach einem der vorhergehenden Ansprüche
**dadurch gekennzeichnet, dass**
die axiale Beschleunigungen und Winkelbeschleunigungen verwendet werden, um festzustellen, ob ein Rutschkupplungsauslösungsereignis stattgefunden hat.

5. Verfahren nach einem der Ansprüche 2 bis 4
**dadurch gekennzeichnet, dass**
die erste Achse eine x-Achse des gedachten Koordinatensystems darstellt, die zweite Achse eine y-Achse und die dritte Achse eine z-Achse.

6. Verfahren nach einem der vorhergehenden Ansprüche
**dadurch gekennzeichnet, dass**
der Sensor zur Erfassung von axialen Beschleunigungen und/oder Winkelbeschleunigungen als Gyrosensor ausgebildet ist.

7. Werkzeugmaschine umfassend einen Sensor zur Erfassung von axialen Beschleunigungen und/oder Winkelbeschleunigungen zur Ausführung des Verfahrens nach einem der vorhergehenden Ansprüche.

8. Werkzeugmaschine nach Anspruch 7
**dadurch gekennzeichnet, dass**
die Werkzeugmaschine eine Anzeigenvorrichtung umfasst.

9. Werkzeugmaschine nach Anspruch 7 oder 8
**dadurch gekennzeichnet, dass**
der Sensor zur Erfassung von axialen Beschleunigungen und/oder Winkelbeschleunigungen als Gyrosensor ausgebildet ist.
